# EUROPÄISCHE PATENTANMELDUNG

(11) **EP 0 905 059 A1**
(43) Veröffentlichungstag der Anmeldung: **31.03.1999**
(21) Anmeldenummer: 98117300.8
(22) Anmeldetag: 12.09.1998
(51) Int. Cl.: B65G 15/62, B65G 21/06, B65G 15/60

(54) **Muldenbandförderer**

(30) Priorität: 12.09.1997 DE 29716417 U
(71) Anmelder: Anlagenbau Stampfer GmbH, 42781 Haan (Gruiten) (DE)
(72) Erfinder: Stampfer, Franz, 42781 Haan (DE)
(74) Vertreter: Bergen, Klaus, Dipl.-Ing.

(57) **Zusammenfassung**

Um bei Muldenbandförderern (1), insbesondere für Stück- und/oder Schüttgut, mit einer Antriebsstation (2), einer Spannstation (4) und mindestens einer Muldenband-Trogstation (3) die Vielzahl unterschiedlicher Einzelteile, wie beispielsweise Profile, Stäbe und Bleche zu minimieren und den ansonsten erheblichen Montageaufwand zu reduzieren, wird vorgeschlagen, die Gehäuse der Stationen (2,3,4) weitestgehend einstückig auszubilden, vorzugsweise aus einem einstückigen Blech herzustellen.

## Beschreibung

Die Neuerung betrifft einen Muldenbandförderer, insbesondere für Stück- und/oder Schüttgut, gemäß dem Oberbegriff des Schutzanspruchs 1.

Derartige Förderer gehören zu den Stetigförderern, die sich dadurch auszeichnen, daß Stück- bzw. Schüttgut kontinuierlich während eines längeren Zeitraums transportiert wird. Bei Bandförderern übernehmen Bandgurte die Funktionen des Tragens und des Fortbewegens des zu transportierenden Guts. Bei Muldenbandförderern ist, wie ihr Name schon sagt, der tragende Trum gemuldet, d.h. quer zur Förderrichtung etwa halbkreisförmig ausgebildet. Die Bandgurte sind endlos und werden von mindestens einer Rolle (Antriebsrolle) angetrieben und durch mindestens eine weitere Rolle (Spann- bzw. Umlenkrolle) gespannt.

Es sind Muldenbandförderer bekannt, deren tragender Trum über Tragrollen geleitet wird, die den Gurt derart abstützen, daß er die gewünschte Muldenform erhält. Dabei werden je nach Breite des Gurtes zwei, drei oder mehr unter einem bestimmten Winkel geneigte Rollen als Tragrollen in einer Querebene eingesetzt (vgl. Lueger, Band 10, "Lexikon der Bautechnik", deutsche Verlagsanstalt Stuttgart, 1966, Seite 121). Diese Rollen haben lediglich eine stützende und keine antreibende oder spannende Funktion.

Da derartige Tragrollen beabstandet angeordnet sind und somit der Gurt nicht eben geführt wird, haftet dieser Art der Muldenbandförderer der Nachteil an, daß das Produkt nicht immer ausreichend schonend befördert wird und es auf dem Förderweg beispielsweise zur Zerstörung von Kornstrukturen kommen kann. Ein weiterer, konstruktiver Nachteil dieser Förderer ist darin zusehen, daß die einzelnen Stationen, in denen die Tragrollen gelagert sind und aus denen der Förderer besteht, aus einer Vielzahl von unterschiedlichen Einzelteilen zusammengesetzt werden, was einen erheblichen Montage- und somit Zeit- und Kostenaufwand mit sich bringt. Darüber hinaus müssen die Tragrollen in regelmäßigen Abständen gewartet und instandgehalten werden.

Wenn im folgenden von "Stationen" gesprochen wird, sind damit die Bereiche eines Förderers gemeint, die die Förderstrecke bilden und in die die zum Transport notwendigen Bauteile, wie beispielsweise Untergurtrollen eingebaut sind. Je nach den Abmessungen des Förderers kann dieser auch nur aus einer Station bestehen.

Zur Vermeidung der erwähnten Nachteile sind Muldenbandförderer entwickelt worden, bei denen der Gurt anstelle von Tragrollen durch ein muldenförmig gebogenes Blech gestützt wird. Dieses Blech, das im Querschnitt die Form der gewünschten Mulde aufweist, ersetzt die Tragrollen für den Obertrum und stützt den Gurt entlang der gesamten Förderstrecke lückenlos, so daß eine ebene Gurtführung und somit eine schonende Gutförderung gewährleistet ist, da das Gut währenddessen auf dem Gurt in Ruhe bleibt und nicht über unebene Rollenbereiche geführt wird.

Bei bekannten Muldenbandförderern dieser Art werden die einzelnen Stationen, aus denen sich der Förderer zusammensetzt, ebenfalls aus einer Vielzahl unterschiedlicher Einzelteile, wie beispielsweise Profilen, Stäben und Blechen, aufgebaut, was einen erheblichen Montageaufwand mit den oben erwähnten Nachteilen mit sich bringt.

Vor diesem Hintergrund liegt der Erfindung das Problem zugrunde, einen Muldenbandförderer der eingangs genannten Art zu schaffen, der die vorerwähnten Nachteile nicht aufweist.

Diese Aufgabe wird erfindungsgemäß mit den Merkmalen des Hauptanspruchs gelöst, der gemäß den Unteransprüchen ausgestaltet sein kann.

Der erfindungsgemäße Muldenbandförderer zeichnet sich dadurch aus, daß die einzelnen Gehäuse der Muldenbandförder-Stationen lediglich aus nur einem Blech - dem Muldenband-Trog - bestehen, welches durch eine einfache geometrische Form gekennzeichnet ist. Dieses Blech wird durch einfache Umform-Bearbeitungsschritte, wie beispielsweise Walzen und/oder Abkanten, hergestellt. Der Einsatz zusätzlicher Bauteile, wie Stäbe und Profile entfällt. Es ist auch denkbar, daß die die Antriebs- und die Umlenkvorrichtungen aufnehmenden Stationsgehäuse jeweils weitestgehend aus einem Blech mittels Umform-Bearbeitungsschritten hergestellt werden.

Der besondere Vorteil der Erfindung ist darin zu sehen, daß die Herstellung der Muldenband-Stationen erheblich einfacher wird, da wesentlich weniger Einzelteile benötigt werden und nur eine geringe Anzahl von Fertigungsschritten notwendig ist und sich dadurch nicht nur Zeit, sondern auch Herstellungs- bzw. Anschaffungskosten sparen lassen. Die Erfindung trägt somit zu einer wirtschaftlicheren Herstellung von Muldenbandförderern bei.

Ein weiterer Vorteil besteht darin, daß sich auch längere Muldenband-Stationen überraschend günstig und rationell fertigen lassen, da sie über ihre gesamte Länge aus einem Blech hergestellt werden können.

In den erfindungsgemäßen Muldenband-Trog bzw. die Trogstationen, aus denen ein Förderer zusammengesetzt wird, können in vorteilhafter Weise jegliche Art von Befestigungs- bzw. Aufnahmevorrichtungen eingebracht werden. So können beispielsweise durch Bohrungen die Voraussetzungen für Schraubverbindungen sowie zur Aufnahme der Lager der Untergurtrollen geschaffen werden. Es ist aber auch jegliche andere Art von Befestigungs- bzw. Aufnahmevorrichtungen denkbar.

Die Erfindung kann Einsatz finden bei Muldenbandförderern der unterschiedlichsten Art für verschiedenartige Güter von pulvrig bis körnig, wobei Förderentfernungen von bis zu 100 m bei Steigungen bis zu 30° mit Muldenbreiten bis ca. 1 m und Leistungen bis zu 400 m³/h erreicht werden können. Der erfindungsgemäße Förderer kann feststehend, verfahrbar und auch schwenkbar eingesetzt werden.

Anhand eines in der beigefügten Zeichnung dargestellten Ausführungsbeispiels wird die Erfindung nachfolgend näher erläutert. Es zeigen:
- Fig. 1: eine Seitenansicht des erfindungsgemäßen Muldenbandförderers mit einer Trogstation;
- Fig. 2: eine Seitenansicht einer Antriebsstation;
- Fig. 3: eine Seitenansicht einer Muldenband-Trogstation;
- Fig. 4: einen Schnitt entlang der Linie IV-IV gemäß Fig. 3 (ohne Auffang-Schublade);
- Fig. 5: eine Seitenansicht einer Spannstation; und
- Fig. 6: ein Gurtführungsstück.

Der dargestellte Muldenbandförderer 1 besteht aus einer Antriebsstation 2, einer Muldenband-Trogstation 3 und einer Spannstation 4. Die Förderstrecke könnte auch aus mehreren Muldenband-Trogstationen 3 zusammengesetzt sein, die miteinander verbunden werden.

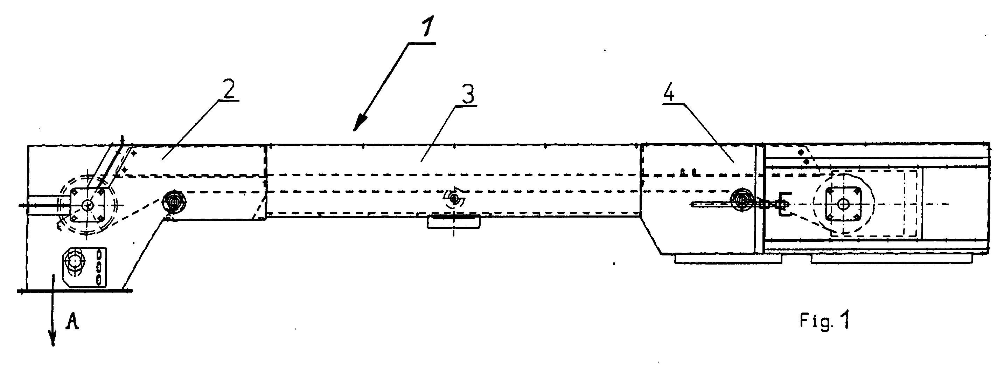

Im Bereich der Antriebsstation 2 befindet sich der Gutaustrag (siehe Pfeil A in Fig. 1). Die Gutaufgabe kann an verschiedenen und vorzugsweise mehreren Stellen entlang der Förderstrecke beispielsweise aus Silos oder über Wiegestationen erfolgen, so daß im Falle von Mehrkomponentengut bereits auf dem Förderweg eine Vormischung erfolgt.

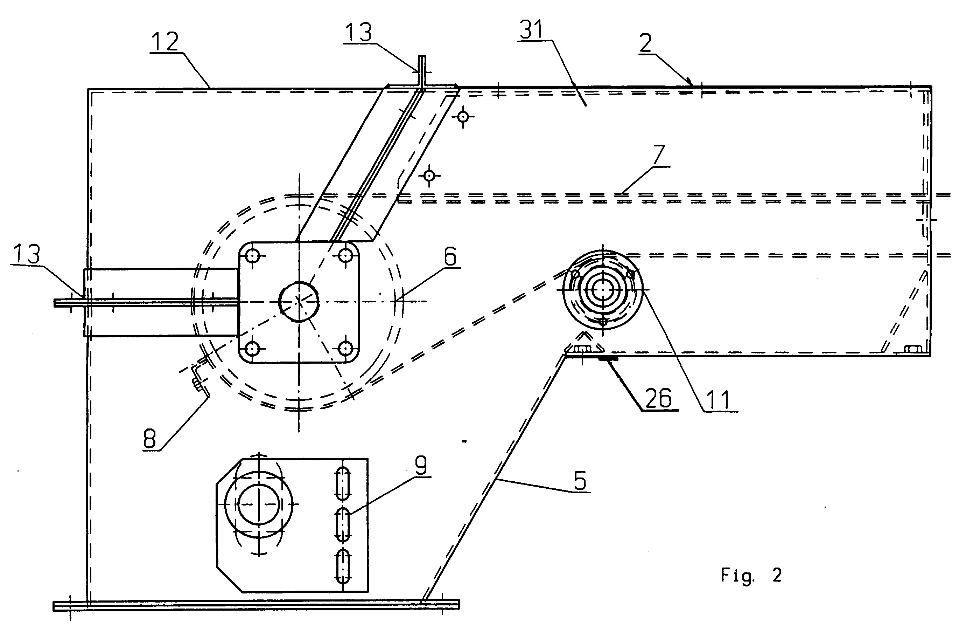

Die in Fig. 2 dargestellte Antriebsstation 2 ist in einem Blechgehäuse 5 untergebracht, das im Sinne der Erfindung aus Blech einstückig durch Umformen hergestellt wird. In dem Blechgehäuse 5 ist eine Antriebsrolle 6 für einen Gurt 7 gelagert. Ein hier nicht dargestellter Antriebsmotor kann an der Außenseite des Blechgehäuses 5 befestigt werden. Direkt an dem Gurt 7 anliegend befindet sich in der Antriebsstation 2 im unteren Bereich der Antriebsrolle 6 ein Abstreifer 8, der über eine Befestigungsvorrichtung 9 mit dem Blechgehäuse 5 verbunden ist und dazu dient, das restliche, am Gurt 7 verbleibende Gut von diesem zu lösen und in einen sich unter der Antriebsstation 2 befindlichen Auslauf zu befördern. Zur Vergrößerung des Umschlingungswinkels des Gurtes 7 um die Antriebsrolle 6 ist des weiteren eine Einschnürrolle 11 in dem Blechgehäuse 5 gelagert, die dem Gurtuntertrum 7 von unten anliegt und achsparallel zur Antriebsrolle 6 in Richtung auf die Trogstation 3 versetzt angeordnet ist. Für Wartungszwecke ist im oberen Bereich des Blechgehäuses 5 ein abnehmbarer Deckel 12 vorgesehen, der über Winkel 13 lösbar mit dem Blechgehäuse verbunden ist.

Es wäre auch denkbar, daß die Winkel 13 einstückig am Blechkasten 5 mittels Umformen angeformt werden.

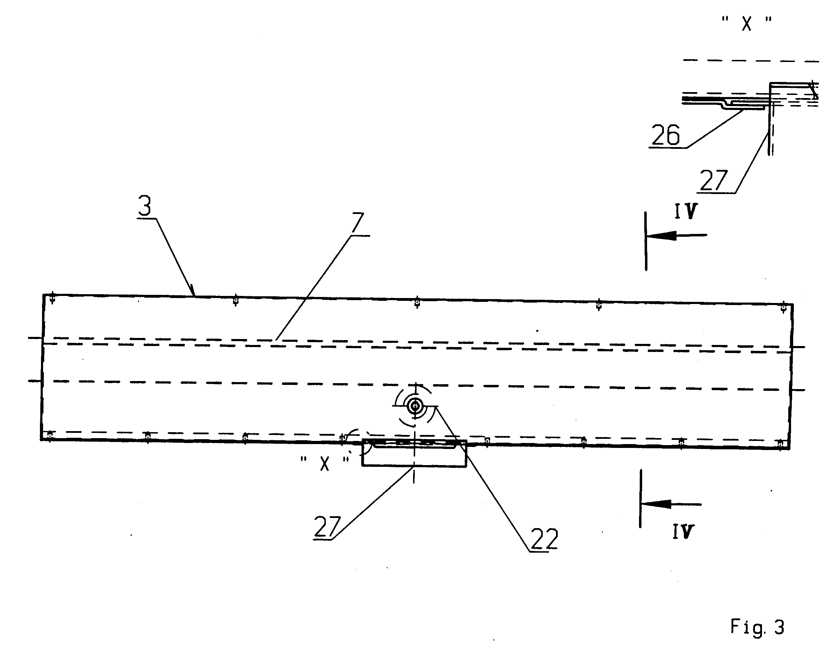

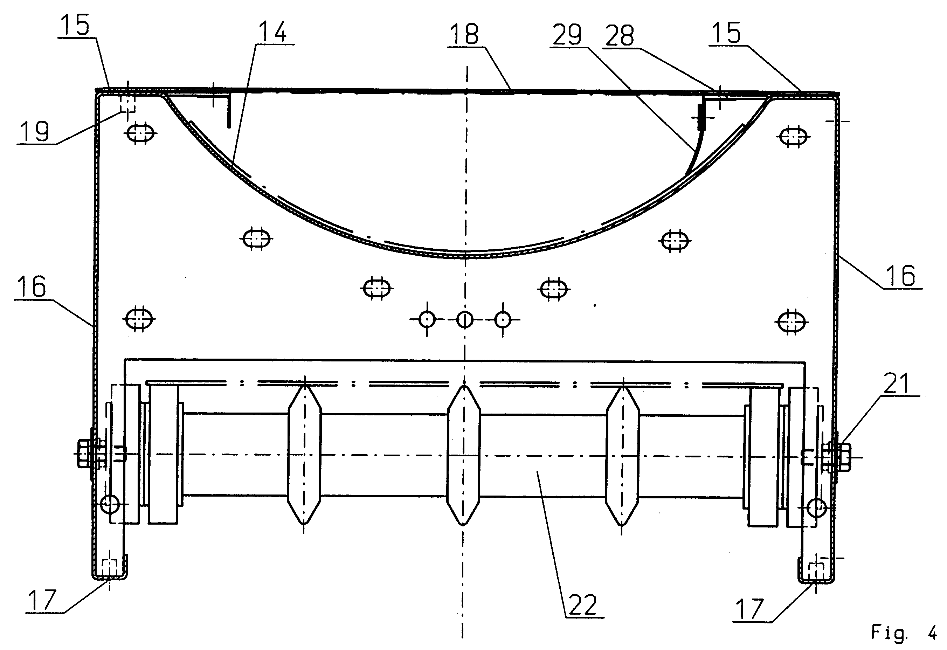

Die Muldenband-Trogstation 3 besteht gemäß Fig. 3 und Fig. 4 aus einem kreissegmentförmigen Abschnitt 14, Auflagestegen 15, Seitenteilen 16 sowie Stabilisierungsstegen 17 und ist durch Umformen einstückig aus einem Blech hergestellt. Der kreissegmentförmige Abschnitt 14 der Muldenband-Trogstation 3 dient dem Abstützen des Gurtes 7. Die Stege 15 dienen als Auflage für einen Deckel 18, der zur Stabilisierung an seinen Rändern abgekantet sein kann und der eine umweltschonende Förderung durch Kapselung der die Produkte fördernden Teile gewährleistet. Der Deckel 18 kann beispielsweise mittels Nieten 19 an den Auflagestegen 15 und somit an der Muldenband-Trogstation 3 befestigt sein. Die Seitenteile 16 weisen Bohrungen 21 beispielsweise zur Aufnahme einer Untergurtrolle 22 und/oder zur Befestigung des gesamten Förderers auf. Die Stabilisierungsstege 17 dienen zum einen zur Stabilisierung des gesamten Bauteils und zum anderen zur Befestigung des gesamten Förderers in seiner Förderposition.

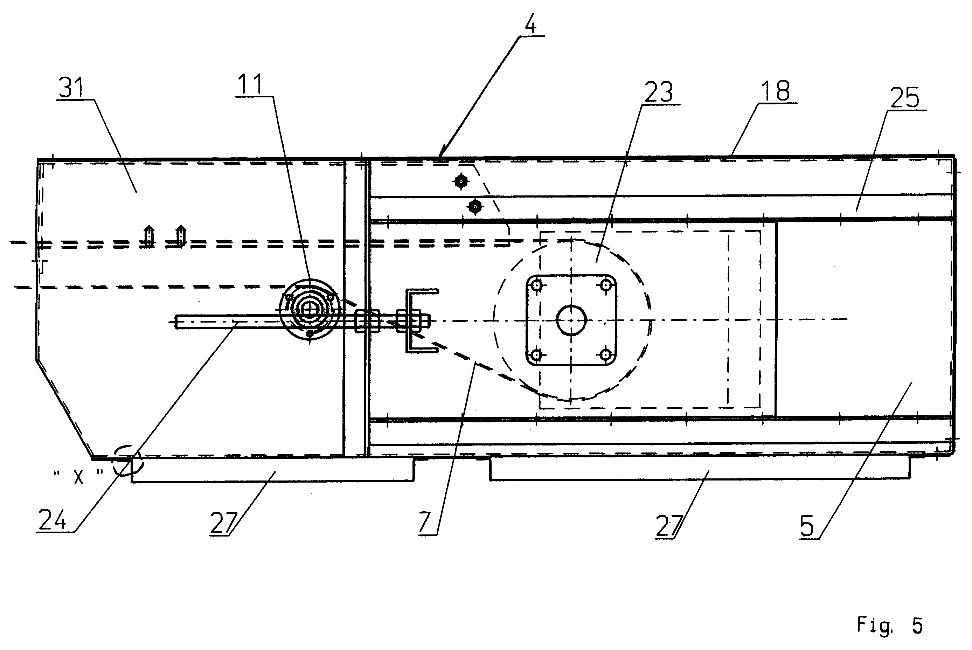

Die Spannstation 4 besteht gemäß Fig. 5 entsprechend der Antriebsstation 2 aus einem Blechgehäuse 5, das ebenfalls in vorteilhafter Weise weitestgehend aus einem Blech geformt ist. In diesem ist eine Umlenkrolle 23 sowie eine wiederum der Vergrößerung des Umschlingungswinkels dienende Einschnürrolle 11 gelagert.

Die Einschnürrolle 11 ist ortsfest mit dem Blechgehäuse 5 verbunden, während die Umlenkrolle 23 mittels einer aus einer Gewindestange bestehenden Spannspindel 24 horizontal verschoben und arretiert werden kann, so daß die gewünschte Vorspannkraft auf den Gurt 7 eingestellt werden kann, die dafür sorgt, daß der Gurt 7 auf seinem Weg durch die Muldenband-Trogstation 3 in gewünschter Weise dem kreissegmentförmigen Abschnitt 14 anliegt. Dazu ist die Umlenkrolle 23 an einem Blech befestigt, das über Schienen 25 horizontal verschiebbar in dem Blechgehäuse 5 gelagert ist. Diese Schienen können ebenfalls durch Umformen einstückig an dem Blechgehäuse 5 angeformt werden.

Auch die Antriebsstation 2 und die Spannstation 4 sind durch den Deckel 18 abgedeckt.

Unter jeder Rolle 11, 22, 23 des Muldenbandförderers 1 sind die in der Einzelheit "X" in Fig. 3 verdeutlicht dargestellten Aufnahmen 26 vorgesehen, die herausziehbare Schubladen 27 tragen. Diese Schubladen 27 dienen dazu, Gut, welches aufgrund elektrostatischer Anziehungskräfte an dem Gurt 7 haften bleibt und bei Kontakt des Untertrums des Gurtes 7 mit einer Rolle 11, 22, 23 durch die dabei erfolgende mechanische Einwirkung abfällt, aufzufangen. Da die Schubladen 27 durch Herausziehen von dem Muldenförderer 1 getrennt werden können, ist das Entfernen des abgefallenen Gutes lediglich durch Entleeren der Schubladen 27 auf einfache Weise möglich.

Zur Produkt- bzw. Gutführung auf dem Gurt 7 sind, wie in Fig. 4 dargestellt, an der Muldenband-Trogstation 3 Bleche 28 vorgesehen, an denen nach unten ragende Gummidichtungen 29 befestigt werden können, die bis auf das Förderband 7 reichen und ein seitliches Überlaufen des Produktes vom Gurt 7 herunter verhindern.

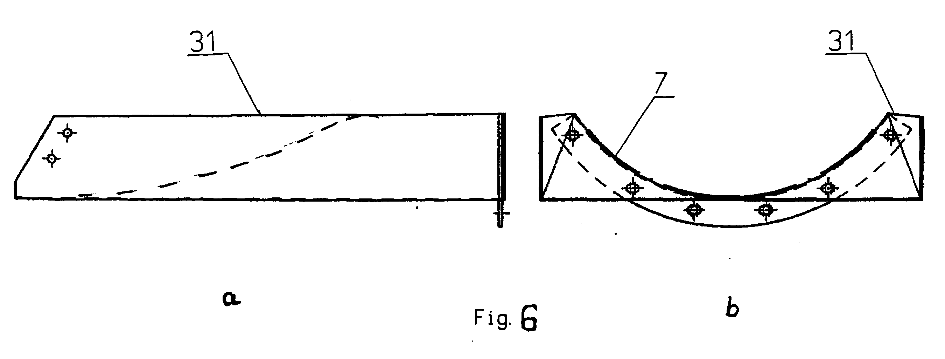

In der Antriebsstation 2 und der Spannstation 4 sind spezielle Übergangsstücke 31 (Fig. 6) eingebaut, die dazu dienen, den Gurt 7 allmählich von seiner Kreissegmentquerschnittsform, die er auf seinem Weg durch die Trogstation 3 einnimmt, in eine Planebene zu überführen und umgekehrt, damit das Gut schonend von der Mulde über die Antriebsrolle 6 bzw. von der Umlenkrolle in die Mulde geführt wird. Dabei fluchtet der Troggrund der Trogstation 3 mit der Oberkante der Antriebsrolle 6. Den Übergangsstücken 31 fällt die Aufgabe zu, die Ränder des Gurtes 7 in eine über der Oberkante der Antriebsrolle 6 liegende Position zu führen, so daß der Gurt die Kreissegmentquerschnittsform des kreissegmentförmigen Abschnitts 14 einnimmt.

In einer bevorzugten Ausführungsform wird zur Reduzierung des Energieaufwandes bei Betreiben des Muldenbandförderers 1 der Gurt 7 luftunterstützt, d.h. es wird durch Einblasen ein Luftpolster zwischen Gurt 7 und Muldenband-Trogstation 3 gebildet, welches die Reibkräfte zwischen Gurt 7 und Muldenband-Trogstation 3 erheblich reduziert.

Durch eine gezielte Einstellung der Umlenkrolle 23 mittels der Spannspindel 24 wird der tragende Teil des Gurtes 7 (Obertrum) so gespannt, daß dieser mit seinen Rändern dichtend der Muldenband-Trogstation 3 anliegt. Durch diese Maßnahme können Entfernungen bis zu 100 m mit einem erfindungsgemäßen Muldenbandförderer überwunden werden. Des weiteren unterstützt das Luftpolster die schonende Förderung des Gutes.

Wird hygroskopisches Gut transportiert, so kann der obere Kanal, d.h. der Raum zwischen dem kreissegmentförmigen Abschnitt 14 und dem Deckel 18 mit trockener Luft geflutet werden, welche überschüssige Feuchtigkeit aufnimmt und damit verhindert, daß das zu transportierende Gut feucht wird.

## Patentansprüche

1. Muldenbandförderer, insbesondere für Stück- und/oder Schüttgut, mit einer Antriebsstation, einer Spannstation und mindestens einer Muldenband-Trogstation, dadurch gekennzeichnet, daß die Gehäuse der Stationen (2,3,4) weitestgehend jeweils einstückig sind.

2. Muldenbandförderer nach Anspruch 1, dadurch gekennzeichnet, daß jede Muldenband-Trogstation (3) aus einem vorzugsweise einstückigen Blech besteht.

3. Muldenbandförderer nach Anspruch 1 oder 2, dadurch gekennzeichnet, daß Antriebsstation (2) und Spannstation (4) aus einem vorzugsweise einstückigen Blech bestehen.

4. Muldenbandförderer nach einem der Ansprüche 1 bis 3, gekennzeichnet durch eine eine Mulde (14), Auflagestege (15), Seitenteile (16) und Stabilisierungsstege (17) aufweisende Muldenband-Trogstation (3).

5. Muldenbandförderer nach einem der Ansprüche 1 bis 4, gekennzeichnet durch eine kreissegmentförmige Mulde (14) der Trogstation (3).

6. Muldenbandförderer nach einem der Ansprüche 1 bis 5, gekennzeichnet durch durch Umformverfahren hergestellte Bauteile.

7. Muldenbandförderer nach einem der Ansprüche 1 bis 6, dadurch gekennzeichnet, daß die Muldenband-Trogstation (3) zunächst durch Walzen der Mulde (14) und anschließend durch Abkanten der Seitenteile (16) und Stabilisierungsstege (17) hergestellt wird.

8. Muldenbandförderer nach einem der Ansprüche 1 bis 7, dadurch gekennzeichnet, daß die Muldenband-Trogstationen (3) mittels lösbarer Verbindungen, beispielsweise Schraubverbindungen, miteinander und mit der Antriebs- (2) sowie der Spannstation (4) verbunden sind.

9. Muldenbandförderer nach einem der Ansprüche 1 bis 8, gekennzeichnet durch Befestigungs- bzw. Aufnahmevorrichtungen in und/oder an den Auflagestegen (15), Seitenteilen (16) und Stabilisierungsstegen (17).

10. Muldenbandförderer nach Anspruch 9, gekennzeichnet durch Aufnahmen 26 für Auffang-Schubladen (27) unterhalb der Muldenband-Trogstation (3), der Antriebs- (2) und der Spannstation (4).

11. Muldenbandförderer nach Anspruch 9, dadurch gekennzeichnet, daß die Vorrichtungen zur Befestigung von mit Gummidichtungen (29) versehenen Führungsblechen (28) im Bereich der Mulde (14) zur Produktführung dienen.

12. Muldenbandförderer nach Anspruch 9, dadurch gekennzeichnet, daß die Vorrichtungen zur Befestigung von Rollen (6, 11, 22, 23) dienen.

13. Muldenbandförderer nach einem der Ansprüche 1 bis 12, gekennzeichnet durch den Gurt (7) von einer Kreissegmentquerschnittsform in eine Planebene und umgekehrt überführende Übergangsstücke (31).

14. Muldenbandförderer nach einem der Ansprüche 1 bis 13, dadurch gekennzeichnet, daß der Troggrund der Trogstation (3) mit der Oberkante der Antriebsrolle (6) fluchtet.

15. Muldenbandförderer nach einem der Ansprüche 1 bis 14, gekennzeichnet durch ein abgekantetes Blech als Deckel (18).

16. Muldenbandförderer nach Anspruch 15, dadurch gekennzeichnet, daß der Deckel (18) an die Antriebs- (2), Muldenband-Trog- (3) und/oder Spannstation (4) genietet ist.

17. Muldenbandförderer nach Anspruch 15 oder 16, dadurch gekennzeichnet, daß der Deckel bzw. die Abdeckhaube (18) lösbar mit dem Förderer verbunden ist.

18. Muldenbandförderer nach einem der Ansprüche 1 bis 17, gekennzeichnet durch ein Luftpolster zwischen Gummiband und Muldenband-Trog.
